# EUROPEAN PATENT SPECIFICATION

(11) **EP 2 584 178 B1**
(45) Date of publication and mention of the grant of the patent: **23.11.2016**
(21) Application number: 10853208.6
(22) Date of filing: 15.06.2010
(51) Int. Cl.: F02D 13/06, F02D 13/02, F02D 41/18, F02D 35/02, F02D 41/12, F02D 17/02

(54) **CONTROL DEVICE FOR AN INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 24.04.2013
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi-ken, 471-8571 (JP); OGAWA, Takashi, Toyota-shi, Aichi-ken, 471-8571 (JP); ITO, Katsuhiro, Toyota-shi, Aichi-ken, 471-8571 (JP); IWATA, Kazuyasu, Toyota-shi, Aichi-ken, 471-8571 (JP); YANASE, Yoshiki, Toyota-shi, Aichi-ken, 471-8571 (JP)
(74) Representative: Intès, Didier Gérard André
(86) International application number: PCT/JP2010/060083
(87) International publication number: WO 2011/158326

(56) References cited:
- EP-A1- 2 549 082
- WO-A1-2010/046999
- DE-A1-102008 036 635
- JP-A- 11 173 125
- JP-A- 59 218 337
- JP-A- 2005 220 880
- JP-A- 2006 342 715
- JP-A- 2007 107 440
- JP-A- 2009 041 539
- JP-A- 2009 079 517

## Description

### Technical Field

The present invention relates to a control apparatus for an internal combustion engine.

### Background Art

So far, for example, Patent Document 1 discloses a diesel engine which executes a fuel cut during its operation.

Including the above described document, the applicant is aware of the following documents as a related art of the present invention.

### Citation List

### Patent Documents

Patent Document 1: Japanese Laid-open Patent Application Publication No. 2008-115780
Patent Document 2: Japanese Laid-open Patent Application Publication No. 2007-107440
Patent Document 3: Japanese Laid-open Patent Application Publication No. 2002-227680
Patent Document 4: Japanese Laid-open Patent Application Publication No. 2006-342715
Patent Document 5: Japanese Laid-open Patent Application Publication No. 2008-291716

### Summary of Invention

### Technical Problem

If a fuel cut is executed at the time of deceleration or the like, only fresh air at ordinary temperatures is taken into a cylinder, in contrast to a state in which combustion is performed, so that high-temperature EGR gas is supplied into the cylinder with fresh air. As a result of that, ambient temperature in the cylinder decreases because the cylinder is cooled. If a return from a fuel cut is executed in a state in which the ambient temperature in the cylinder has decreased, there is possibility that a misfire occurs and the amount of hydrocarbon (HC) emission is increased.

The present invention has been made to solve the problem as described above, and has its object to provide a control apparatus for an internal combustion engine, which can increase ambient temperatures in a cylinder and an intake system during execution of a fuel cut, thereby ensuring ignitability of fuel successfully at a return from the fuel cut.

### Solution to Problem

A first aspect of the present invention is a control apparatus for an internal combustion engine, the apparatus comprising:
a variable valve operating mechanism which is capable of changing at least a closing timing of an exhaust valve and;
fuel cut execution means which executes a fuel cut when a predetermined execution condition is established during an operation of the internal combustion engine;
accumulating amount determination means which determines whether or not an accumulating amount of a deposit that accumulates in an intake system is equal to or larger than a predetermined value; and
valve timing control means which controls at least the closing timing of the exhaust valve to obtain a fuel-cut-time valve timing when the fuel cut is executed,
wherein the fuel-cut-time valve timing is set so that the exhaust valve is closed at an advance side relative to an exhaust top dead center and the intake valve is closed at a timing which is after the closing timing of the exhaust valve and the advance angle amount of the closing timing of the exhaust valve is advanced more when the accumulating amount of the deposit is determined to be equal to or larger than the predetermined value by the accumulating amount determination means than when the accumulating amount is determined to be smaller than the predetermined value.

A second aspect of the present invention is the control apparatus for an internal combustion engine according to the first aspect of the present invention,
wherein the fuel cut is a deceleration fuel cut that is executed at a time of deceleration.

A third aspect of the present invention is the control apparatus for an internal combustion engine according to the first or second aspect of the present invention, the apparatus further comprising:
temperature determination means which determines whether or not an ambient temperature in a cylinder of the internal combustion engine is equal to or lower than a predetermined temperature,
wherein the valve timing control means controls at least the closing timing of the exhaust valve to obtain the fuel-cut-time valve timing when the ambient temperature in the cylinder is determined to be equal to or lower than the predetermined temperature by the temperature determination means.

A fourth aspect of the present invention is the control apparatus for an internal combustion engine according to any one of the first to third aspects of the present invention , the apparatus further comprising:
intake air quantity detection means which detects an intake air quantity,
wherein the accumulating amount determination means determines the accumulating amount of the deposit based on a degree of a decrease over time in the intake air quantity.

### Advantageous Effects of Invention

According to the first aspect of the present invention, by using the aforementioned fuel-cut-time valve timing at fuel cut during the execution of a fuel cut, gas inside a cylinder can be compressed again in a late stage of the exhaust stroke, and the gas inside the cylinder, the temperature of which has increased by the recompression, can be flown back into an intake passage. This makes it possible to increase ambient temperatures in the cylinder and the intake passage, thereby successfully ensuring the ignitability of fuel at a return from the fuel cut. It also becomes possible to more enhance an effect blowing off a deposit that is accumulated in an intake system due to the high-temperature and high-pressure gas in the cylinder that is compressed again in a late stage of the exhaust stroke. This allows deterioration over time of the internal combustion engine to be suppressed more efficiently.

According to the second aspect of the present invention, the ignitability of fuel can be successfully ensured at a return from a deceleration fuel cut.

According to the third aspect of the present invention, the control of at least the closing timing of the exhaust valve to obtain the aforementioned fuel-cut-time valve timing is executed only a case in which the ambient temperature in the cylinder is decreased to the aforementioned predetermined temperature or lower. Therefore, the influence of the aforementioned control on, for example, the drivability of the internal combustion engine can be minimized.

According to the seventh aspect of the present invention, it is possible to successfully determine whether or not the accumulating amount of the deposit is large or small.

### Brief Description of Drawings

Fig. 1 is a diagram for explaining a system configuration according to a comparative example;
Fig. 2 is a diagram illustrating valve timings of intake and exhaust valves that are used in the comparative example;
Fig. 3 is a flowchart of a routine that is executed in the comparative example;
Fig. 4 is a P-V diagram that is used for describing the advantageous effect of the control according to the comparative example; and
Fig. 5 is a flowchart of a routine that is executed in an embodiment of the present invention.

### Description of Embodiments

### Comparative Example

### [System Configuration of Comparative Example]

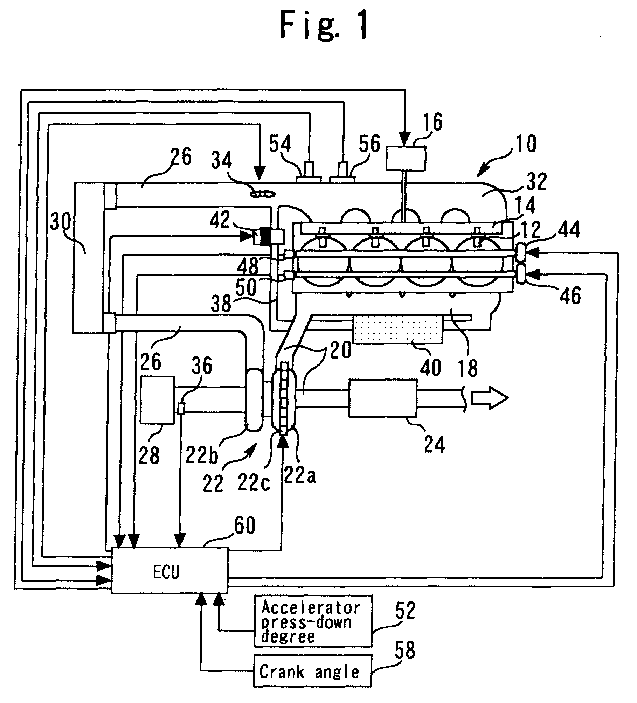

Fig. 1 is a diagram for explaining a system configuration according to a comparative example. The system shown in Fig. 1 includes an internal combustion engine 10. It is assumed herein that the internal combustion engine 10 is a 4-cycle diesel engine (compression ignition internal combustion engine) 10 and is mounted in a vehicle to work as its power source. Although the internal combustion engine 10 of the present comparative example is of an in-line 4 cylinder type, the number and arrangement of cylinders in the internal combustion engine in the present invention is not limited to the foregoing.

An injector 12 that directly injects fuel into the cylinder is installed in each cylinder of the internal combustion engine 10. The injector 12 of each cylinder is connected to a common common-rail 14. In the common-rail 14, a high pressure fuel which is pressurized by a supply pump 16 is stored. Then, from this common-rail 14, the fuel is supplied to the injector 12 of each cylinder. The exhaust gas discharged from each cylinder is collected by an exhaust manifold 18 to flow into an exhaust passage 20.

The internal combustion engine 10 includes a variable nozzle type turbocharger 22. The turbocharger 22 includes a turbine 22a which is operated by exhaust energy of exhaust gas, and a compressor 22b which is integrally coupled to the turbine 22a and is driven to rotate by the exhaust energy of the exhaust gas input to the turbine 22a. Further, the turbocharger 22 includes a variable nozzle (VN) 22c for adjusting the flow rate of the exhaust gas supplied to the turbine 22a.

The turbine 22a of the turbocharger 22 is disposed at some point in the exhaust passage 20. An exhaust gas purification device 24 that is capable of purifying the exhaust gas is installed at a downstream side of the turbine 22a in the exhaust passage 20.

An air cleaner 28 is provided in the vicinity of the inlet of an intake passage 26 of the internal combustion engine 10. The air suctioned through the air cleaner 28 is compressed by the compressor 22b of the turbocharger 22 and thereafter is cooled by an intercooler 30. The suctioned air which has passed through the intercooler 30 is distributed by an intake manifold 32 to flow into each cylinder. An intake throttle valve 34 is installed in the intake passage 26 between the intercooler 30 and the intake manifold 32. Moreover, an air flow meter 36 for detecting the quantity of intake air is installed near the downstream of the air cleaner 28 in the intake passage 26.

One end of an EGR passage 38 is connected to the vicinity of the intake manifold 32. The other end of the EGR passage 38 is connected to the exhaust manifold 18 of the exhaust passage 20. In some point of the EGR passage 38, an EGR cooler 40 is provided for cooling EGR gas which passes through the EGR passage 38. An EGR valve 42 is provided downstream of the EGR cooler 40 in the EGR passage 38.

Moreover, the internal combustion engine 10 includes an intake variable valve operating mechanism 44 which makes valve opening characteristics of an intake valve (not shown) variable, and an exhaust variable valve operating mechanism 46 which makes valve opening characteristics of an exhaust valve (not shown) variable. More specifically, it is assumed herein that each of these variable valve operating mechanisms 44 and 46 includes a phase variable mechanism (VVT mechanism) which can continuously changing opening and closing timings of the intake valve or exhaust valve while fixing an operating angle thereof, by changing a rotation phase of a camshaft with respect to a rotation phase of a crankshaft. Moreover, an intake cam angle sensor 48 and an exhaust cam angle sensor 50, which detect the rotation angle of each camshaft, that is, an intake cam angle and an exhaust cam angle, are disposed respectively in the vicinity of the intake camshaft and the exhaust camshaft.

Moreover, the system of the present embodiment includes an accelerator press-down degree sensor 52 which detects a depression amount of an accelerator pedal (an accelerator press-down degree) of the vehicle equipped with the diesel engine 10, an intake pressure sensor 54 for detecting an intake manifold pressure (intake pressure), an intake temperature sensor 56 for detecting an intake manifold temperature (intake temperature), and a crank angle sensor 58 for detecting a crank angle.

Furthermore, the system of the present embodiment includes an ECU (Electronic Control Unit) 60. Moreover, the various sensors and actuators described above are connected to the ECU 60. The ECU 60 can also calculate an engine rotational speed based on a detection signal of the crank angle sensor 58. Further, the ECU 60 can calculate advance angle quantities of the opening and closing timing of the intake valve and the exhaust valve based on detection signals of the above described cam angle sensors 48 and 50. The ECU 60 controls the operating state of the internal combustion engine 10 by actuating each actuator according to the output of each sensor and predetermined programs.

### [Characteristic Control in Comparative Example]

The system of the present comparative example executes a fuel cut when a predetermined execution condition is established at the time of deceleration or the like. In contrast to when performing combustion with supply of the high-temperature EGR gas as well as fresh air into the cylinder, only fresh air at ordinary temperatures is supplied into the cylinder when the fuel cut is executed. As a result of this, since the inside of the cylinder is cooled, the ambient temperature in the cylinder is decreased. If a return from a fuel cut is executed in a state in which the ambient temperature in the cylinder has decreased, there is possibility that a misfire occurs and the amount of hydrocarbon (HC) emission is increased. Unlike a spark-ignition gasoline engine, such a problem of misfire of fuel is more conspicuous in a compression self-ignition diesel engine without relying on a spark plug.

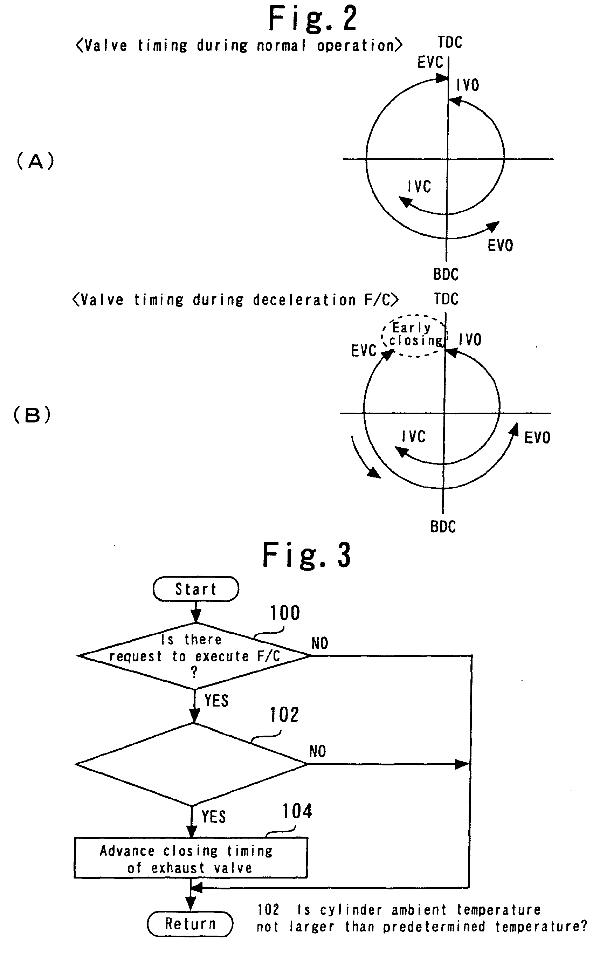

Fig. 2 is a diagram illustrating valve timings of the intake and exhaust valves that are used in the comparative example. It is noted that in Fig. 2, "EVO" represents an opening timing of the exhaust valve, "EVC" represents an closing timing of the exhaust valve, "IVO" represents an opening timing of the intake valve, and "IVC" represents a closing timing of the intake valve.

Fig. 2(A) shows one example of valve timings of the intake and exhaust valves that are used during normal operation (during performing combustion) of the internal combustion engine 10. A setting shown in Fig. 2(A) is made such that the exhaust valve opens at a timing on the advance side of the expansion bottom dead center (BDC) and thereafter closes near the exhaust top dead center (TDC). Further, a setting is made such that the intake valve opens near the exhaust top dead center, and thereafter closes at a timing on the retard side of the intake top dead center (BDC).

On the other hand, Fig. 2(B) shows one example of the intake and exhaust valves that are used in the present comparative example during the execution of a fuel cut. In the present comparative example, in order to ensure ignitability at a return from the fuel cut, if it is determined that the ambient temperature in the cylinder is equal to or higher than a predetermined temperature during the execution of a fuel cut, an arrangement is adopted as shown in Fig. 2(B) so that the closing timing of the exhaust valve (EVC) is advanced to a timing on the advance side of the exhaust top dead center. It is noted that in the setting shown in Fig. 2(B), the opening timing of the intake valve (IVO) is also controlled (set) near the exhaust top dead center.

Fig. 3 is a flowchart of a control routine to be executed by the ECU 60 in the present comparative example to realize the above described function. In this connection, it is assumed that the present routine is executed repeatedly at predetermined control intervals.

In the routine shown in Fig. 3, first, it is determined whether or not a request to execute a fuel cut (F/C) is generated (step 100). Examples of the case in which the fuel cut is executed during the operation of the internal combustion engine 10 include a case of deceleration in a situation where the engine rotational speed is higher than a predetermined rotational speed, a case of high speed rotation where the engine rotational speed has reached an upper-limit rotational speed, a case of high speed where the vehicle speed has exceeded a predetermined speed limit, and the like.

If it is determined in step 100 that a request to execute a fuel cut is generated, next, it is determined whether or not an ambient temperature in the cylinder is equal to or lower than a predetermined temperature (step 102). The predetermined temperature in present step 102 is assumed to be an ambient temperature in the cylinder under the worst operating condition in terms of ensuring the ignitability during the operation of the internal combustion engine 10 (for example, idling condition). The process of present step 102 can be executed using the following technique or the like. Specifically, the technique is made such that an process to sum the intake temperature detected by the intake temperature sensor 56 and the intake air quantity detected by the air flow meter 36 is executed sequentially during the execution of a fuel cut. The total value of these intake temperature and intake air quantity can be an index to judge a drop in the ambient temperature in the cylinder, and the ambient temperature in the cylinder decreases as this total value becomes greater. It is therefore possible whether or not the ambient temperature in the cylinder has become equal to or lower than the aforementioned predetermined temperature by judging whether or not the total value has reached a predetermined value.

If it is determined in step 102 that the ambient temperature in the cylinder is equal to or lower than the aforementioned predetermined temperature, next, an operation to advance the closing timing of the exhaust valve is executed (step 104). More specifically, in present step 104, the closing timing of the exhaust valve that has been set near the exhaust top dead center during the normal operation (see Fig. 2(A)) is advanced to a timing of, for example, about 35 degrees in crank angle before the exhaust top dead center.

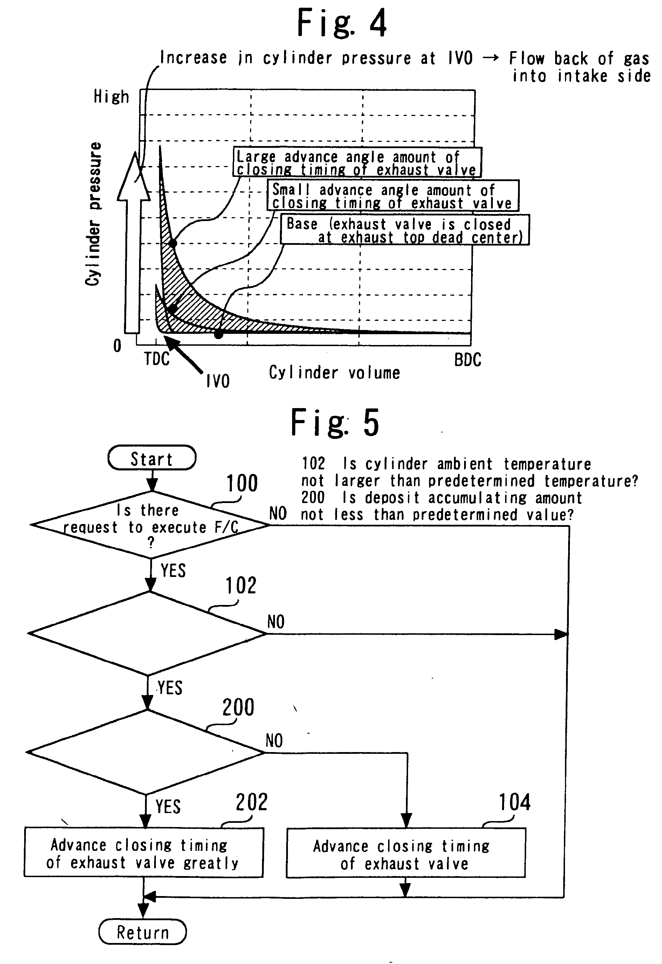

Fig. 4 is a P-V diagram that is used for describing the effect of the control according to the comparative example. More specifically, Fig. 4 represents a change in the cylinder pressure during the exhaust stroke. In this connection, it is supposed in Fig. 4 that the opening timing of the intake valve (IVO) is set near the exhaust top dead center as shown in the respective drawings in aforementioned Fig. 2.

As shown "Base" in Fig. 4, when the exhaust valve is closed at the exhaust top dead center, the cylinder pressure during the exhaust stroke shows an approximately constant value. In contrast to this, if the closing timing of the exhaust valve is advanced to a timing on the advance side of the exhaust top dead center, the gas in the cylinder is compressed again during the exhaust stroke. As a result of this, in a late stage of the exhaust stroke, the cylinder pressure rises and the gas temperature inside the cylinder rises as shown in Fig. 4. Then, the high-temperature and high-pressure gas inside the cylinder is flown back into the intake manifold 32 when the intake valve opens at the exhaust top dead center. Moreover, as shown in Fig. 4, the degree to which the cylinder pressure rises by advancing the closing timing of the exhaust valve increases as the advance angle quantity of the closing timing of the exhaust valve increases.

According to the above described operation to advance the closing timing of the exhaust valve, the temperature of the gas in the cylinder is increased in a late stage of the exhaust stroke, thereby increasing the ambient temperatures inside the cylinder and the intake manifold 32. Therefore, as represented by the routine shown in Fig. 3, when the ambient temperature in the cylinder is decreased to the aforementioned predetermined temperature or lower during the execution of a fuel cut, it is possible to successfully ensure the ignitability of fuel at the time of a return from the fuel cut by advancing the closing timing of the exhaust valve with respect to the exhaust top dead center. This makes it possible to suppress an increase in the amount of HC emission due to misfire of fuel. Further, by causing the high-temperature and high-pressure gas inside the cylinder, which is compressed again in a late stage of the exhaust stroke, to flow back into the intake system, it becomes possible to blow off deposits that are accumulated in the intake system and thereby to suppress deterioration over time of the internal combustion engine 10.

Furthermore, according to the routine described above, the advance control of the closing timing of the exhaust valve is performed only in the case in which the ambient temperature in the cylinder is decreased to the aforementioned predetermined temperature or lower, and thus the influence of this advance control on, for example, the drivability of the internal combustion engine 10 can be minimized.

It is noted that in the comparative example, which has been described above, the intake variable valve operating mechanism 44 and the exhaust variable valve operating mechanism 46 correspond to the "variable valve operating mechanism" as in the first aspect of the present invention. Further, the ECU 60 executes a fuel cut when the determination result in above described step 100 is positive, whereby the "fuel cut execution means" as in the first aspect of the present invention is realized; and the ECU 60 executes the processing of above described step 104.

Furthermore, the ECU 60 executes the processing of above described step 102, whereby a "temperature determination means" as in the third aspect of the present invention is realized.

### Embodiment

Next, an embodiment of the present invention will be described with reference to Fig. 5.

A system of the present embodiment can be realized by causing the ECU 60 to execute a routine shown in Fig. 5 which will be described later instead of the routine shown in Fig. 3, by using the hardware configuration shown in Fig. 1.

In a diesel engine as in the internal combustion engine 10, supply of a large quantity of EGR gas is performed in a broad operating region to reduce NOx. Further, the exhaust gas of the diesel engine includes a larger quantity of soot compared with a gasoline engine. Therefore, in the intake system of the diesel engine, soot and the like are easy to accumulate as a deposit. If the accumulating amount of the deposit to the intake system (in particular, intake valve) becomes greater, a flow rate coefficient of the intake passage 26 is decreased.

In the present embodiment as well, when it is determined that the ambient temperature in the cylinder is decreased to the aforementioned predetermined temperature or lower during the execution of a fuel cut, an operation to advance the closing timing of the exhaust valve to the advance side of the exhaust top dead center is executed as in the first embodiment described above. On that basis, in the present embodiment, when it is determined that the accumulating amount of the deposit to the intake system (in particular, intake valve) is equal to or greater than a predetermined value, the closing timing of the exhaust valve is advanced more than in the case in which the accumulating amount is smaller than the aforementioned predetermined value.

Fig. 5 is a flowchart of a control routine to be executed by the ECU 60 according to the present second embodiment to realize the above described function. In Fig. 5, steps that are the same as steps in the flowchart illustrated in Fig. 3 according to the first embodiment are denoted by the same reference numbers, and a description of those steps is omitted or simplified below.

In the routine shown in Fig. 5, if it is determined in step 102 that the ambient temperature in the cylinder is equal to or lower than the aforementioned predetermined temperature, next, it is determined whether or not the accumulating amount of the deposit to the intake system is equal to or larger than a predetermined value (step 200). More specifically, in present step 200, it is determined whether the accumulating amount of the deposit to the intake system is large or small, based on whether or not the current intake air quantity is decreased by a predetermined quantity (or predetermined rate) compared with the intake air quantity obtained during the execution of a fuel cut under the same engine rotational speed as that when the internal combustion engine 10 is brand new. In this connection, instead of the determination based on such a change in the intake air quantity, it may be determined whether the accumulating amount of the deposit to the intake system is large or small based on whether or not the running distance of the vehicle equipped with the internal combustion engine 10 exceeds a predetermined value.

If it is determined in step 200 that the accumulating amount of the deposit to the intake system is smaller than the aforementioned predetermined value, the closing timing of the exhaust valve is advanced based on a value that is set for this case (for example, 35 degrees in crank angle before the exhaust top dead center) (step 104).

On the other hand, if it is determined in step 200 that the accumulating amount of the deposit to the intake system is equal to or larger than the aforementioned predetermined value, the closing timing of the exhaust valve is advanced even more based on a value (for example, 65 degrees in crank angle before the exhaust top dead center) that is even greater than the value used in step 104 (step 202).

According to the routine shown in Fig. 5 described so far, if it is determined that the accumulating amount of the deposit to the intake system is equal to or larger than the aforementioned predetermined value, the closing timing of the exhaust valve is advanced even more. As described above with reference to Fig. 4, as the advance angle quantity of the closing timing of the exhaust valve becomes greater, the cylinder pressure and the gas temperature in the cylinder increases more. Therefore, according to the processing of the present routine, it becomes possible to further enhance an effect blowing off the deposit that is accumulated in the intake system due to the high-temperature and high-pressure gas in the cylinder that is compressed again in a late stage of the exhaust stroke. This allows deterioration over time of the internal combustion engine 10 to be suppressed more efficiently.

In the embodiment, which has been described above, when it is determined that the accumulating amount of the deposit to the intake system is large, a configuration is adopted so that the advance angle quantity of the closing timing of the intake valve is enlarged compared with that when the amount is not large. Instead of such a technique, the advance angle quantity of the closing timing of the exhaust valve may be enlarged even more as the accumulating amount of the deposit to the intake system increases.

It is noted that in the embodiment, which has been described above, the ECU 60 executes the processing of above described step 200, whereby the "accumulating amount determination means" according to the first aspect of the present invention is realized.

Further, the ECU 60 detects an intake air quantity by means of the air flow meter 36, whereby the "intake air quantity detection means" according to the fourth aspect of the present invention is realized.

In the comparative example and the embodiment, which have been described above, if it is determined that the ambient temperature in the cylinder is equal to or lower than the aforementioned predetermined temperature during the execution of a fuel cut, the control is adopted so that the closing timing of the exhaust valve is advanced from a timing near the exhaust top dead center in the configuration in which the opening timing of the intake valve is set near the exhaust top dead center. According to such a technique, the temperature and pressure of gas inside the cylinder are increased in a late stage of the exhaust stroke and thereafter the intake valve is opened before the pressure and temperature of the gas inside the cylinder start to decrease, so that the gas can be flown back into the intake system. This makes it possible to bring out an effect to early close the exhaust valve at a maximum. However, the fuel-cut-time valve timing in the present invention is not limited to the valve timings of the intake and exhaust valves described above, provided that an exhaust valve is closed on the advance side relative to the exhaust top dead center and an intake valve is closed at a timing which is after the closing timing of the exhaust valve. Further, the present invention is not limited to the one that controls the closing timing of the exhaust valve, and may also control the opening timing of the intake valve so that the fuel-cut-time valve timing of the present invention is obtained. More specifically, for example, the opening timing of the intake valve may be retarded toward near the exhaust top dead center, provided that a fuel cut is executed in a state in which the closing timing of the exhaust valve and the opening timing of the intake valve are both being advanced with respect to the exhaust top dead center. Furthermore, a configuration may be adopted so that the aforementioned fuel-cut-time valve timing is realized by controlling both of the closing timing of the exhaust valve and the opening timing of the intake valve.

Further, in the comparative example and the embodiment, which have been described above, a configuration is adopted so that the closing timing of the exhaust valve is advanced to the advance side of the exhaust top dead center in a case in which the ambient temperature in the cylinder is decreased to the predetermined temperature or lower during the execution of a fuel cut, by means of the exhaust variable valve operating mechanism 46 including the phase variable mechanism that is capable of changing the opening and closing timings of the exhaust valve while fixing the operating angle. However, the configuration of the variable valve operating mechanism that is used for the present invention is not limited to the above described configuration. More specifically, for example, the closing timing of the exhaust valve in the present invention may be corrected by means of an operating angle variable mechanism that is capable of continuously changing the operating angle of the exhaust valve, and, if an operation to correct the opening timing of the intake valve is also executed, it may be executed by means of an operating angle variable mechanism that is capable of continuously changing the operating angle of the intake valve.

Furthermore, in the comparative example and the embodiment, which have been described above, it is determined whether or not a request to execute a fuel cut is generated, and thereafter a configuration is adopted so that the closing timing of the exhaust valve is advanced with respect to the exhaust top dead center when a fuel cut is executed. However, the present invention is not limited to the one that detects even whether or not a request to execute a fuel cut is generated upon the execution of the fuel cut. More specifically, any arrangement may be applicable, provided that at least the closing timing of the exhaust valve is controlled so that the fuel-cut-time valve timing is obtained upon the execution of a fuel cut.

### Description of symbols

- 10: internal combustion engine
- 12: injector
- 18: exhaust manifold
- 20: exhaust passage
- 22: turbocharger
- 26: intake passage
- 32: intake manifold
- 36: air flow meter
- 44: intake variable valve operating mechanism
- 46: exhaust variable valve operating mechanism
- 48: intake cam angle sensor
- 50: exhaust cam angle sensor
- 60: ECU (Electronic Control Unit)

## Claims

1. A control apparatus for an internal combustion engine (10), the apparatus comprising:
a variable valve operating mechanism (44, 46) which is capable of changing at least a closing timing of an exhaust valve;
fuel cut execution means which is configured so as to execute a fuel cut when a predetermined execution condition is established during an operation of the internal combustion engine (10); and
valve timing control means which is configured so as to control at least the closing timing of the exhaust valve to obtain a fuel-cut-time valve timing when the fuel cut is executed,
wherein the fuel-cut-time valve timing is set so that the exhaust valve is closed at an advance side relative to an exhaust top dead center and an intake valve is closed at a timing which is after the closing timing of the exhaust valve ; and the control apparatus being **characterized in that** it further comprises accumulating amount determination means for determining whether or not an accumulating amount of a deposit that accumulates in an intake system is equal to or larger than a predetermined value; and wherein the valve timing control means is configured so as to increase the advance angle amount of the closing timing of the exhaust valve more when the accumulating amount of the deposit is determined to be equal to or larger than the predetermined value by the accumulating amount determination means than when the accumulating amount is determined to be smaller than the predetermined value.

2. The control apparatus for an internal combustion engine (10) according to claim 1,
wherein the fuel cut is a deceleration fuel cut that is executed at a time of deceleration.

3. The control apparatus for an internal combustion engine (10) according to claim 1 or 2, the apparatus further comprising:
temperature determination means for determining whether or not an ambient temperature in a cylinder of the internal combustion engine (10) is equal to or lower than a predetermined temperature,
wherein the valve timing control means is configured so as to control at least the closing timing of the exhaust valve to obtain the fuel-cut-time valve timing when the ambient temperature in the cylinder is determined to be equal to or lower than the predetermined temperature by the temperature determination means.

4. The control apparatus for an internal combustion engine (10) according to any one of claims 1 to 3, the apparatus further comprising:
intake air quantity detection means for detecting an intake air quantity,
wherein the accumulating amount determination means is configured so as to determine the accumulating amount of the deposit based on a degree of a decrease over time in the intake air quantity.

## Patentansprüche

1. Steuerungsvorrichtung für einen Verbrennungsmotor (10), wobei die Vorrichtung umfasst:
einen variablen Ventilsteuerungsmechanismus (44, 46), der in der Lage ist, mindestens einen Schließzeitpunkt eines Auslassventils zu ändern,
ein Kraftstoffabschaltungsausführungsmittel, das dazu ausgebildet ist, eine Kraftstoffabschaltung auszuführen, wenn während eines Betriebs des Verbrennungsmotors (10) eine vorgegebene Ausführungsbedingung erreicht wird, und
ein Ventilsteuerzeiten-Steuerungsmittel, das dazu ausgebildet ist, mindestens den Schließzeitpunkt des Auslassventils zu steuern, um einen Kraftstoffabschaltzeit-Ventilsteuerzeitpunkt, wenn die Kraftstoffabschaltung ausgeführt wird, zu erhalten,
wobei der Kraftstoffabschaltzeit-Ventilsteuerzeitpunkt derart eingestellt wird, dass das Auslassventil auf einer Frühverstellungsseite in Bezug auf einen oberen Auslasstotpunkt geschlossen wird und ein Einlassventil zu einem Zeitpunkt geschlossen wird, der nach dem Schließzeitpunkt des Auslassventils liegt, und wobei die Steuerungsvorrichtung **dadurch gekennzeichnet ist, dass** sie ferner ein Ansammlungsmengenbestimmungsmittel zum Bestimmen, ob eine sich ansammelnde Menge einer Ablagerung, die sich in einem Einlasssystem ansammelt, größer gleich einem vorgegebenen Wert ist oder nicht, umfasst, und
wobei das Ventilsteuerzeiten-Steuerungsmittel dazu ausgebildet ist, das Verstellwinkelausmaß des Schließzeitpunkts des Auslassventils, wenn durch das Ansammlungsmengenbestimmungsmittel festgestellt wird, dass die sich ansammelnde Menge der Ablagerung größer gleich dem vorgegebenen Wert ist, mehr zu erhöhen als wenn festgestellt wird, dass die sich ansammelnde Menge kleiner als der vorgegebene Wert ist.

2. Steuerungsvorrichtung für einen Verbrennungsmotor (10) nach Anspruch 1,
wobei die Kraftstoffabschaltung eine Verlangsamungskraftstoffabschaltung ist, die zu einem Zeitpunkt der Verlangsamung ausgeführt wird.

3. Steuerungsvorrichtung für einen Verbrennungsmotor (10) nach Anspruch 1 oder 2, wobei die Vorrichtung ferner umfasst:
ein Temperaturbestimmungsmittel zum Bestimmen, ob eine Umgebungstemperatur in einem Zylinder des Verbrennungsmotors (10) kleiner gleich einer vorgegebenen Temperatur ist,
wobei das Ventilsteuerzeiten-Steuerungsmittel dazu ausgebildet ist, mindestens den Schließzeitpunkt des Auslassventils zu steuern, um den Kraftstoffabschaltzeit-Ventilsteuerzeitpunkt zu erhalten, wenn durch das Temperaturbestimmungsmittel bestimmt wird, dass die Umgebungstemperatur in dem Zylinder kleiner gleich der vorgegebenen Temperatur ist.

4. Steuerungsvorrichtung für einen Verbrennungsmotor (10) nach einem beliebigen der Ansprüche 1 bis 3, wobei die Vorrichtung ferner umfasst:
ein Einlassluftmengendetektiermittel zum Detektieren einer Einlassluftmenge,
wobei das Ansammlungsmengenbestimmungsmittel dazu ausgebildet ist, die sich ansammelnde Menge der Ablagerung basierend auf einem Ausmaß einer Abnahme der Einlassluftmenge im Zeitverlauf zu bestimmen.

## Revendications

1. Appareil de commande pour un moteur à combustion interne (10), l'appareil comportant :
un mécanisme d'actionnement de soupape variable (44, 46) qui est capable de changer au moins un calage de fermeture d'une soupape d'échappement ;
des moyens d'exécution de coupure de carburant qui sont configurés de façon à exécuter une coupure de carburant quand une condition d'exécution prédéterminée est établie pendant un fonctionnement du moteur à combustion interne (10) ; et
des moyens de commande de calage de soupape qui sont configurés de façon à commander au moins le calage de fermeture de la soupape d'échappement pour obtenir un calage de soupape de temps de coupure de carburant quand la coupure de carburant est exécutée,
dans lequel le calage de soupape de temps de coupure de carburant est établi de telle sorte que la soupape d'échappement est fermée sur un côté d'avance par rapport à un point mort haut d'échappement et une valve d'admission est fermée à un calage qui est après le calage de fermeture de la soupape d'échappement ; et
l'appareil de commande étant **caractérisé en ce qu'**il comporte en outre des moyens de détermination de quantité d'accumulation destinés à déterminer si une quantité d'accumulation d'un dépôt qui s'accumule dans un système d'admission est égale ou supérieure ou non à une valeur prédéterminée ; et dans lequel
les moyens de commande de calage de soupape sont configurés de façon à augmenter la quantité d'angle d'avance du calage de fermeture de la soupape d'échappement davantage quand la quantité d'accumulation du dépôt est déterminée comme étant égale ou supérieure à la valeur prédéterminée par les moyens d'accumulation de détermination de valeur que quand la valeur d'accumulation est déterminée comme étant plus petite que la valeur prédéterminée.

2. Appareil de commande pour un moteur à combustion interne (10) selon la revendication 1,
dans lequel la coupure de carburant est une coupure de carburant à la décélération qui est exécutée au moment de la décélération.

3. Appareil de commande pour un moteur à combustion interne (10) selon la revendication 1 ou 2, l'appareil comportant en outre :
des moyens de détermination de température destinés à déterminer si une température ambiante dans un cylindre du moteur à combustion interne (10) est égale ou inférieure ou non à une température prédéterminée,
dans lequel les moyens de commande de calage de soupape sont configurés de façon à commander au moins le calage de fermeture de la soupape d'échappement pour obtenir le calage de soupape de temps de coupure de carburant quand la température ambiante dans le cylindre est déterminée comme étant égale ou inférieure à la température prédéterminée par les moyens de détermination de température.

4. Appareil de commande pour un moteur à combustion interne (10) selon l'une quelconque des revendications 1 à 3, l'appareil comportant en outre :
des moyens de détection de quantité d'air d'admission destinés à détecter une quantité d'air d'admission,
dans lequel les moyens de détermination de quantité d'accumulation sont configurés de façon à déterminer la quantité d'accumulation du dépôt sur la base d'un degré d'une diminution dans le temps de la quantity d'air d'admission.
